Europäisches Patentamt

European Patent Office

Office européen des brevets

(19)

(11) **EP 0 539 531 B1**

(12) **EUROPÄISCHE PATENTSCHRIFT**

(45) Veröffentlichungstag und Bekanntmachung des Hinweises auf die Patenterteilung:
**14.08.1996   Patentblatt 1996/33**

(51) Int Cl.$^6$: **H02J 9/06**

(86) Internationale Anmeldenummer:
**PCT/DE92/00126**

(21) Anmeldenummer: **92905394.0**

(22) Anmeldetag: **21.02.1992**

(87) Internationale Veröffentlichungsnummer:
**WO 92/16992 (01.10.1992 Gazette 1992/25)**

(54) **EINRICHTUNG ZUR UNTERDRÜCKUNG VON SPANNUNGSEINBRÜCHEN**

DEVICE FOR SUPPRESSING VOLTAGE DROPS

DISPOSITIF POUR LA SUPPRESSION DE CHUTES DE TENSION

(84) Benannte Vertragsstaaten:
**DE FR GB**

(30) Priorität: **23.03.1991   DE 4109645**

(43) Veröffentlichungstag der Anmeldung:
**05.05.1993   Patentblatt 1993/18**

(73) Patentinhaber: **ROBERT BOSCH GMBH**
**70442 Stuttgart (DE)**

(72) Erfinder:
• **LOISTL, Hans**
**D-7141 Schwieberdingen (DE)**
• **BACH, Jochen**
**D-7141 Schwieberdingen (DE)**

(56) Entgegenhaltungen:
**WO-A-91/00636          WO-A-91/00637**

EP 0 539 531 B1

# Beschreibung

Stand der Technik

Die Erfindung geht aus von einer Einrichtung nach der Gattung des Hauptanspruchs.

Die Steuerung bzw. Regelung des Motors eines Kraftfahrzeugs aber auch die Steuerung von Antiblokkiersystemen (ABS) oder Antriebsschlupfregelungen (ASR) erfolgt heute üblicherweise mit Hilfe eines Steuergeräts. Das Steuergerät wird von der Batterie des Kraftfahrzeugs mit Spannung versorgt, da an die Konstanz dieser Spannung besondere Anforderungen gestellt werden, ist dem Steuergerät üblicherweise ein separater Spannungsregler zugeordnet.

Bei einer in der nicht vorveröffentlichten DE-P 40 41 620 beschriebenen Steuergeräte-Spannungsversorgung wird über eine erste Leitung ein erster Eingang des Steuergeräts dauernd mit Spannung versorgt. Dabei ist nicht vorgesehen, die Spannungsversorgung zu unterbrechen, wenn der Motor abgeschaltet wird.

Über eine zweite Leitung wird ein zweiter Eingang des Steuergerätes mit einer geschalteten Batteriespannung versorgt. Dabei liegt zwischen der Batterie und dem Steuergeräteeingang der Zündschalter.

Wird der Motor ausgeschaltet, ist der Zündschalter geöffnet und am entsprechenden Steuergeräteeingang liegt keine Spannung mehr an.

Eine derartige Spannungsversorgung hat sich als vorteilhaft erwiesen, da ein Kraftfahrzeug unterschiedliche Verbraucher aufweist, von denen einige ständig mit Spannung versorgt werden müssen, auch bei ausgeschalteten Motor, während andere nur während des Betriebs mit Spannung versorgt werden müssen.

Die in der DE-P 40 41 620 beschriebene Anordnung hat jedoch den Nachteil, daß bei Störungen, beispielsweise bei kurzzeitigen Spannungseinbrüchen, die im rauhen Betrieb eines Kraftfahrzeugs auftreten können, die Dauerspannungsversorgung bzw. geschaltete Batteriespannung in unzulässiger Weise für kurze Zeit unterbrochen werden und diese Unterbrechung dann zu einem Reset des Steuergerätes führt. Da nach einem solchen Reset eine Neuinitialisierung des Mikrocomputersystems des Steuergeräts erforderlich ist, kann während dieser Initialisierungzeit keine Steuerung beispielsweise der Benzineinspritzung oder der Zündung durch das Steuergerät erfolgen.

Aus der WO 91/00637 ist eine Spannungsversorgungseinrichtung für ein elektronisches Gerät bekannt, bei der das elektronische Gerät von einer Batterie über eine erste Leitung mit Spannung versorgt wird. Weiterhin ist vorgesehen, eine Energiereserve, beispielsweise einen Kondensator, über Umschaltmittel ebenfalls mit dem zu versorgenden elektronischen Gerät zu verbinden und dazu ist eine zweite Leitung vorhanden, die auf denselben Anschluß des elektronischen Geräts führt wie die erste Leitung. Die Zuschaltung der Energiereserve erfolgt immer dann, wenn ein Ausfall oder ein Absinken der Betriebsspannung auf der ersten Leitung erkannt wird. Diese bekannte Spannungsversorgungseinrichtung hat den Nachteil, daß ein zusätzliche Energiereserve benötigt wird, deren Energieentnahme laufend überwacht werden muß, damit eine ggf. eintretende Entleerung der Energiereserve zuverlässig erkannt wird.

Vorteile der Erfindung

Die erfindungsgemäße Einrichtung zur Unterdrückung von Spannungseinbrüchen mit den kennzeichnenden Merkmalen des Hauptanspruchs hat demgegenüber den Vorteil, daß die Spannungs-Dauerversorgung des Steuergeräts beim Auftreten eines Spannungseinbruchs weiterhin aufrechterhalten bleibt, da die Spannungsversorgung in diesem Fall über die zweite Leitung, die die geschaltete Batteriespannung führt, sowie die zwischen diesen beiden Leitungen angeordnete Schaltungsanordnung erfolgt.

Besonders vorteilhaft ist, daß die Schaltungsanordnung, die zwischen den beiden Leitungen liegt, einen hohen Strom führen kann und keinen nennenswerten Spannungsabfall verursacht.

Die zwischen den beiden Leitungen angeordnete Schaltungsanordnung beeinflußt im Normalfall, also wenn keine Spannungseinbrüche auftreten, die Spannungsversorgung nicht, dies ist ein weiterer Vorteil der erfindungsgemäßen Einrichtung.

Durch die in den Unteransprüchen aufgeführten Maßnahmen sind vorteilhafte Weiterbildungen und Verbesserungen der im Hauptanspruch angegebenen Einrichtung möglich.

Zeichnung

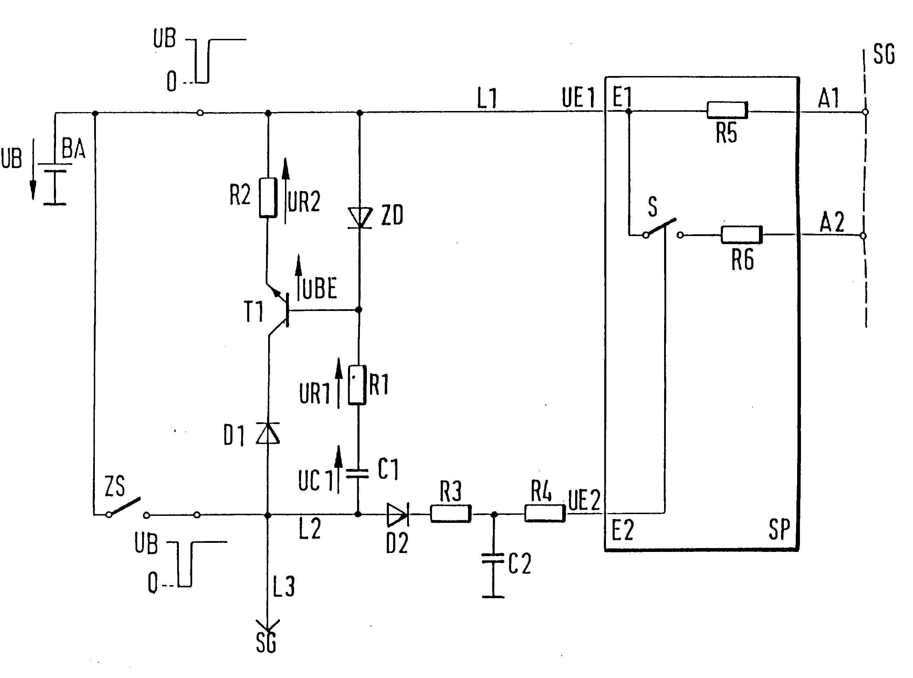

Ein Ausführungsbeispiel der Erfindung ist in der Zeichnung dargestellt und wird in der nachfolgenden Beschreibung näher erläutert.

Beschreibung des Ausführungsbeispiels

Der Plusanschluß einer Batterie BA, deren Minusanschluß mit Masse in Verbindung steht, ist über eine erste Leitung L1 mit einem ersten Eingang EI eines Spannungsreglers SP, der Bestandteil eines Steuergerätes SG ist, verbunden. Weiterhin ist der Plusanschluß der Batterie BA über eine zweite Leitung L2 sowie eine Serienschaltung einer Diode D2, eines Widerstandes R3 und eines Widerstandes R4 mit einem zweiten Eingang E2 des Spannungsreglers SP verbunden, wobei sich zwischen der Batterie BA und der Diode D2 der Zündschalter ZS befindet.

Der Verbindungspunkt zwischen den Widerständen R3 und R4 ist über einen Kondensator C2 mit Masse verbunden, vom Verbindungspunkt zwischen dem Zündschalter ZS und der Anode der Diode D2 führt eine weitere Leitung L3 zum Steuergerät SG.

Zwischen den Leitungen L1 und L2 befindet sich die erfindungsgemäße Schaltunganordnung. Dabei ist die Anode einer Zenerdiode ZD an die Leitung L1 angeschlossen, ihre Kathode ist mit einer Seite eines Widerstandes R1 verbunden, dessen andere Seite mit einem Kondensator C1 verbunden ist, der wiederum an die Leitung L2 angeschlossen ist, wobei sich der Anschlußpunkt zwischen dem Zündschalter ZS und der Anode der Diode D2 befindet.

Eine Reihenschaltung eines Widerstandes R2, der Emitter-Kollektor-Strecke eines Transistors T1 und einer Diode D1 ist parallel zu der Reihenschaltung der Zenerdiode ZD, des Widerstandes R1 und des Kondensators C1 zwischen die Leitungen L1 und L2 geschaltet, wobei die Anode der Diode D1 an die Leitung L2 angeschlossen ist und die Kathode der Diode D1 an den Kollektor des Transistors T1. Die Basis des Transistors T1 ist mit dem Verbindungspunkt zwischen der Kathode der Zenerdiode ZD und dem Widerstand R1 verbunden.

Der Spannungsregler SP weist intern wenigstens eine nicht näher spezifizierte Schaltung auf, die symbolisch als Widerstand R5 dargestellt ist und zwischen dem Eingang E1 und dem, mit dem Steuergerät SG verbundenen Ausgang A1 liegt. Weiterhin ist der Eingang EI mit einem Pol eines Schalters S verbunden, dessen anderer Pol über eine Schaltung, die durch R6 symbolisiert ist, auf den Ausgang A2 geführt ist. A2 führt dabei zum Steuergerät SG. Angesteuert wird der Schalter S über den Eingang E2 des Spannungsreglers SP.

Über die Leitung L1 ist der Spannungsregler SP des Steuergerätes SG ständig mit der Batterie BA verbunden. Über diese dauernde Verbindungsleitung werden die Teile des Steuergerätes bzw. des Bordnetzes, die ständig mit Spannung versorgt werden müssen, versorgt. Außerdem wird über diese Leitung L1, abhängig vom Zustand der Leitung L2, der Teil des SG's versorgt, der bei geschlossenem Zündschalter ZS versorgt werden muß.

Neben dieser Dauerplusversorgung erfolgt über die zweite Leitung L2 die Versorgung des Steuergerätes bzw. der nachgeschalteten, nicht dargestellten Verbraucher mit einer geschalteten Batteriespannung. Diese geschaltete Batteriespannung wird über den Zündschalter ZS an den Spannungsregler SP weitergeleitet, bei ausgeschaltetem Motor, also bei offenen Zündschalter wird die Spannungszufuhr zum Spannungsregler SP unterbrochen. Durch diesen Eingang wird der Teil des Spannungsreglers ausgeschaltet, der bei ausgeschaltetem Motor spannungslos sein soll.

Da während des Betriebs des Kraftfahrzeugs immer wieder kurzzeitige Spannungseinbrüche auftreten können, beispielsweise beim Zuschalten weiterer Verbraucher oder aufgrund eines Wackelkontaktes, besteht die Gefahr, daß das Steuergerät beim Auftreten eines solchen Spannungseinbruches einen Reset und damit eine Neuinitialisierung des Mikrocomputersystems durchführt. Während dieser Initialisierungszeit kann das Steuergerät die Zündung bzw. Einspritzung nicht steuern.

Ein solcher Spannungseinbruch auf der Versorgungsleitung L1, der in der Figur durch das Absinken der Batteriespannung UB auf den Wert Null dargestellt ist, wird durch die Schaltungsanordnung zwischen den Leitungen L1 und L2 kompensiert.

Bei einer solchen kurzzeitigen Unterbrechung auf der Leitung L1 wird über den leitenden Transistor T1 die geschaltete Batteriespannung von der Leitung L2 auf die Leitung L1 weitergegeben, so daß am Eingang EI ein solcher Spannungseinbruch keine Wirkung mehr zeigt. Der im Normalzustand entladende Kondensator C1 lädt sich dabei über die Widerstände R1 und R2 durch den Basisstrom des Transistors T1 auf. Solange eine vorgegebene Spannung UE1 am Eingang E1 des Spannungsreg- lers nicht unterschritten wird, ist die Funktion des Steuergerätes voll gewährleistet.

Die maximal zulässige Unterbrechungszeit, die noch nicht zur Abschaltung des Steuergerätes führt, wird bestimmt durch die Dimensionierung des Kondensators C1 bzw. durch die entsprechende Aufladezeit auf die aufgrund der Maschenregel resultierende Spannung. Dabei gilt:

$$UB - UC1, ZUL - UR1 - UBE - UR2 > UE1, MIN$$

Solange die Unterbrechungszeit kleiner ist als die Ladezeit des Kondensators bleibt also das Steuergerät SG eingeschaltet, seine Spannungsversorgung über den Zweig D1, T1, R2 bleibt bestehen.

Überschreitet die Spannung am Kondensator UC1 den zulässigen Wert UC1, ZUL, wird das Steuergerät abgeschaltet. Bei vollständig geladenen Kondensator C1 sperrt der Transistor T1, womit die Spannungsversorgung am Eingang E1 von Leitung L2 her unterbrochen wird.

Wenn nach Beendigung der Störung die Versorgung des Steuergerätes wieder über die Dauerspannungsversorgung über die Leitung L1 erfolgt, wird der Kondensator C1 über die Zenerdiode ZD und den Schutzwiderstand R1 entladen.

Die Zenerdiode hat zusätzlich die Aufgabe. zusammen mit dem Widerstand R2 eine Strombegrenzung bei leitendem Zustand des Transistors T1 zu bewirken.

Die Diode D1 verhindert ein Einschalten des Spannungsreglers über die Zenerdiode ZD und die Basis-Kollektor-Strecke des Transistors T1 von Leitung 1 (Dauerspannungsversorgung) aus.

Der mit der Leitung L2 verbundene Schaltungsteil, mit der Diode D2, den Widerständen R3 und R4 sowie dem Kondensator C2 dient zur Überbrückung von kurzzeitigen Spannungseinbrüchen an der geschalteten Spannung (UE2). Beim Auftreten eines solchen Spannungseinbruches verhindert die Diode D2 die Entladung des Kondensators C2 über den Widerstand R3.

**Patentansprüche**

1.   Einrichtung zur Unterdrückung von Spannungseinbrüchen bei Geräten (SG), die zur Ihrer Spannungsversorgung über wenigstens zwei Leitungen (L1,L2) mit einem Anschluß einer Batterie (BA) verbindbar sind, dadurch gekennzeichnet, daß die beiden Leitungen mit zwei Anschlüssen des Geräts in Verbindung stehen, daß zwischen den zwei Leitungen eine Schaltungsanordnung mit einer Reihenschaltung einer Zenerdiode (ZD), eines Widerstandes (R1) und eines Kondensators (C1) liegt, daß parallel zu dieser Reihenschaltung eine Reihenschaltung eines Widerstandes (R2), der Emitter-Kollektor-Strecke eines Transistors (T2) und einer Diode (D1) liegt, daß die Basis des Transistors (T1) mit der Kathode der Zenerdiode (ZD) verbunden ist und die Anode der Zenerdiode (ZD) mit der ersten Leitung (L1) und die Anode der Diode (D1) mit der zweiten Leitung (L2) verbunden ist und daß der Transistor (T1) über den Kondensator (C1) während des Auftretens eines Spannungseinbruchs auf der ersten Leitung eine leitende Verbindung zur zweiten Leitung herstellt.

2. Einrichtung nach Anspruch 1, dadurch gekennzeichnet, daß das Gerät ein Steuergerät (SG) in einem Fahrzeug ist, daß die erste Leitung (L1) das Steuergerät (SG) dauernd mit der Batterie (BA) verbindet und die zweite Leitung (L2) über ein Schaltmittel, vorzugsweise den Zündschalter (ZS) an die Batterie anschließbar ist.

3. Einrichtung nach Anspruch 1 oder 2, dadurch gekennzeichnet, daß das Gerät einen Spannungsregler (SP) umfaßt, mit einem ersten Anschluß (E1), der über die Leitung (L1) mit der Batterie (BA) in Verbindung steht und mit einem zweiten Anschluß (E2), der über die Leitung (L2) mit dem Zündschalter (ZS) in Verbindung steht und einem weiteren Schaltmittel (S), das bei geschlossenem Zündschalter ebenfalls geschlossen ist.

4. Einrichtung nach Anspruch 3, dadurch gekennzeichnet, daß der Zündschalters (ZS) über ein RC-Glied (R3, R4, C2) mit dem Eingang (E2) des Spannungsreglers (SP) verbunden ist.

5. Einrichtung nach Anspruch 4, dadurch gekennzeichnet, daß zwischen dem Zündschalter (ZS) und dem RC-Glied (R3, R4, C2) eine Diode (D2) liegt, deren Anode auf den Zündschalter (ZS) führt.

6. Einrichtung nach einem der vorhergehenden Ansprüche, dadurch gekennzeichnet, daß der der Batterie abgewandte Pol des Zündschalters (ZS) mit einer weiteren Leitung (L3) mit dem Steuergerät (SG) verbunden ist.

**Claims**

1. Device for suppressing voltage drops in apparatuses (SG) which, for their voltage supply, can be connected to a terminal of a battery (BA) via at least two leads (L1, L2), characterized in that the two leads are connected to two terminals of the apparatus, in that a circuit arrangement with a series circuit of a Zener diode (ZD), a resistor (R1) and a capacitor (C1) is located between the two leads, in that parallel to this series circuit there is a series circuit of a resistor (R2), the emitter-collector path of a transistor (T2) and a diode (D1), in that the base of the transistor (T1) is connected to the cathode of the Zener diode (ZD) and the anode of the Zener diode (ZD) is connected to the first lead (L1) and the anode of the diode (D1) is connected to the second lead (L2), and in that, during the occurrence of a voltage drop on the first lead, the transistor (T1) produces a conductive connection to the second lead via the capacitor (C1).

2. Device according to Claim 1, characterized in that the apparatus is a control apparatus (SG) in a vehicle, in that the first lead (L1) continuously connects the control apparatus (SG) to the battery (BA) and the second lead (L2) can be connected to the battery via a switching means, preferably the ignition switch (ZS).

3. Device according to Claim 1 or 2, characterized in that the apparatus comprises a voltage regulator (SP), with a first terminal (E1) which is connected via the lead (L1) to the battery (BA), and with a second terminal (E2) which is connected via the lead (L2) to the ignition switch (ZS) and a further switching means (S) which is also closed when the ignition switch is closed.

4. Device according to Claim 3, characterized in that the ignition switch (ZS) is connected to the input (E2) of the voltage regulator (SP) via an RC element (R3, R4, C2).

5. Device according to Claim 4, characterized in that a diode (D2) whose anode leads to the ignition switch (ZS) is located between the ignition switch (ZS) and the RC element (R3, R4, C2).

6. Device according to one of the preceding claims, characterized in that that pole of the ignition switch (ZS) which faces away from the battery is connected to the control apparatus (SG) with a further lead (L3).

**Revendications**

1. Installation pour supprimer les coupures de tension d'appareils (SG) dont l'alimentation en tension se fait par au moins deux lignes (L1, L2), reliées à une borne d'une batterie (BA), caractérisée en ce que

   les deux lignes sont reliées aux bornes de l'appareil et, entre les deux lignes, se trouve un circuit ayant un montage en série comprenant une diode Zener (ZD), une résistance (R1) et un condensateur (C1), en parallèle à ce circuit série, on a un montage en série comprenant une résistance (R2), le chemin émetteur-collecteur d'un transistor (T2) et une diode (D1),

   - la base du transistor (T1) est reliée à la cathode de la diode Zener (ZD) dont l'anode est reliée à la première ligne (L1), l'anode de la diode (D1) étant reliée à la seconde ligne (L2), et
   - le transistor (T1) établit par le condensateur (C1), pendant l'occurrence d'une chute de tension sur la première ligne (L1), une liaison avec la seconde ligne (L2).

2. Installation selon la revendication 1, caractérisée en ce que l'appareil est un appareil de commande (SG) d'un véhicule, la première ligne (L1) relie en permanence l'appareil de commande (SG) à la batterie (BA) et la seconde ligne (L2) peut être reliée à la batterie par un moyen de commutation, de préférence le commutateur d'allumage (ZS).

3. Installation selon la revendication 1 ou 2, caractérisée en ce que l'appareil comporte un régulateur de tension (SP) ayant une première borne (E1) reliée par la ligne (L1) à la batterie (BA) et une seconde borne (E2) reliée par la ligne (L2) au commutateur d'allumage (ZS), et un autre moyen de commutation (S) qui est également fermé lorsque le commutateur d'allumage est fermé.

4. Installation selon la revendication 3, caractérisée en ce que l'interrupteur d'allumage (ZS) est relié à l'entrée (E2) du régulateur de tension (SP) par l'intermédiaire d'un élément RC (R3, R4, C2).

5. Installation selon la revendication 4, caractérisée par une diode (D2) entre le commutateur d'allumage (ZS) et l'élément RC (R3, R4, C2), l'anode de la diode étant reliée au commutateur d'allumage (ZS).

6. Installation selon l'une des revendications précédentes, caractérisée en ce que le pôle du commutateur d'allumage (ZS) non situé du côté de la batterie est relié à l'appareil de commande (SG) par une autre ligne (L3).

SG

A1 A2

SP

R5 R6

S

E1 E2

UE1 UE2

R4

L1 C2

R3

ZD D2

R1 C1

UBE UR1 UC1 L2

UR2

R2 T1 D1 L3 SG

UB

ZS

UB

BA

UB